# EUROPÄISCHE PATENTSCHRIFT

(11) **EP 2 963 351 B1**
(45) Veröffentlichungstag und Bekanntmachung des Hinweises auf die Patenterteilung: **25.01.2017**
(21) Anmeldenummer: 14160539.4
(22) Anmeldetag: 18.03.2014
(51) Int. Cl.: F24D 19/06, F24D 19/02, F24D 3/14

(54) **Heizkörper mit Wärmeisolationsplatte sowie Heizkörperanordnung**
Radiator with thermal insulation panel and radiator assembly
Corps de chauffe doté d'une plaque d'isolation thermique et agencement de corps de chauffe

(30) Priorität: 31.10.2013 DE 202013104887 U
(43) Veröffentlichungstag der Anmeldung: 06.01.2016
(73) Patentinhaber: Ribe Jern Holding A/S, 6760 Ribe (DK)
(72) Erfinder: Olesen, Michael Boel, 6650 Borup (DK)
(74) Vertreter: Lösch, Christoph Ludwig Klaus

(56) Entgegenhaltungen:
- EP-A2- 2 374 951
- DE-A1-102005 048 210
- DE-A1-102007 024 776
- DE-U- 7 309 652

## Beschreibung

Die Erfindung betrifft einen Heizkörper und eine Heizkörperanordnung. Die von Heizkörpern abgegebene Wärme wird typischerweise in sämtliche Raumrichtungen abgegeben, sodass auch eine auf der Rückseite des Heizkörpers angeordnete Wand bzw. Wandnische erwärmt wird. Eine derartige Erwärmung von Wandbereichen ist im Allgemeinen jedoch unerwünscht, da die hierfür aufgewendete Energiemenge nicht mehr zum eigentlich gewünschten Erwärmen des Raumes zur Verfügung steht. Die Energieeffizienz des Heizkörpers ist entsprechend gering.

Der Erfindung liegt die Aufgabe zugrunde, einen Heizkörper bzw. eine Heizkörperanordnung mit hoher Energieeffizienz anzubieten. Diese Aufgabe wird durch einen Heizkörper mit den Merkmalen des Anspruchs 1 bzw. durch eine Heizkörperanordnung mit den Merkmalen des Anspruchs 8 gelöst. Vorteilhafte Ausführungsformen sind in den jeweiligen Unteransprüchen beschrieben.
Der erfindungsgemäße Heizkörper besitzt einen im Wesentlichen die Form eines langgezogenen Rechtecks aufweisenden Grundkörper, einen ersten rückseitig am Grundkörper angebrachten Heizwasseranschluss, einen zweiten rückseitig am Grundkörper angebrachten Heizwasseranschluss und eine rückseitig am Grundkörper angebrachte, im Wesentlichen die Form eines langgezogenen Rechtecks aufweisende Wärmeisolationsplatte. Die Wärmeisolationsplatte weist eine dem Grundkörper zugewandte Ausnehmung auf, in der durch den Grundkörper erwärmte Luft zirkulieren kann, wobei die Ausnehmung sich in Richtung der Längsseite der Wärmeisolationsplatte erstreckt.

Ein Heizkörper mit den Merkmalen des Oberbegriffs von Anspruch 1 ist z. B. aus Dokument DE 10 2005 048210 bekannt.

Durch die Anordnung einer Wärmeisolationsplatte auf der Rückseite des Grundkörpers wird die Wärmeabstrahlung in Richtung Wand verringert. Die Energieeffizienz des Heizkörpers steigt entsprechend.

Die dem Grundkörper zugewandte Ausnehmung in der Wärmeisolationsplatte führt dazu, dass zwischen Grundkörper und Wärmisolation ein Luftschacht entsteht, in welchem die durch den Grundkörper erwärmte Luft zirkulieren kann. Es wird also eine Konvention ermöglicht. Auf diese Weise wird also zum einen der Heizkörper durch die Wärmeisolationsplatte gegenüber der Wand abgeschirmt, zum anderen wird jedoch eine Konvektionserwärmung auch auf der Rückseite des Grundkörpers ermöglicht.
Die beiden Heizwasseranschlüsse dienen dem Anschluss des heizkörperseitigen Heizwasserkreislaufs an ein bauseitig vorhandenes Heizrohrsystem. Einer der Heizwasseranschlüsse fungiert hierbei als Heizwasserzulauf, während der andere Heizwasseranschluss als Heizwasserrücklauf fungiert. Die Position des Heizwasserzulaufs bzw. -rücklaufs ist hierbei variabel und kann je nach Bedarf angepasst werden. Innerhalb des Grundkörpers ist der heizkörperseitige Heizwasserkreislauf ausgebildet. Der Grundkörper übernimmt damit die eigentliche Erwärmungsaufgabe. Beispielsweise ist der Grundkörper als Heizpanel ausgebildet.

Gemäß der Erfindung erstreckt sich die Aussparung in Richtung der Längsseite der Wärmeisolationsplatte. Die Aussparung besitzt folglich eine langgestreckte Form. Dies ermöglicht eine besonders gute Konvektion innerhalb der Aussparung. Die Energieeffizienz des Heizkörpers wird somit im besonderen Maße erhöht.

In einer weiteren vorteilhaften Ausführungsform weist die Wärmeisolationsplatte ferner eine Aussparung zur Aufnahme des ersten Heizwasseranschlusses und/oder des zweiten Heizwasseranschlusses auf. Auf diese Weise kann der Heizwasseranschluss in die Wärmeisolationsplatte integriert werden bzw. die Wärmeisolationsplatte kann auch den Heizwasseranschluss thermisch isolieren. Damit steigert sich die Energieeffizienz des Heizkörpers abermals.

In einer weiteren vorteilhaften Ausführungsform ist am Grundkörper mindestens ein Montageelement zur Montage des Heizkörpers an eine Wand angebracht und die Wärmeisolationsplatte weist im Bereich des Montageelements eine Montageaussparung auf. Auf diese Weise ist eine sichere Verbindung zwischen Wand und Heizkörper möglich. Zugleich ermöglicht die Montageaussparung, dass die Wärmeisolationsplatte in anderen Bereichen die Rückseite des Grundkörpers bedeckt und auf diese Weise die Energieeffizienz erhöht.

Als besonders vorteilhaften haben sich Wärmeisolationsplatten herausgestellt, die als Vakuum-Isolations-Panel oder als Platte aus Polyisocyanurate (PIR) ausgebildet sind.

In einer weiteren vorteilhaften Ausführungsform weist der Heizkörper ferner eine Frontplatte, die vorderseitig an dem Grundkörper angeordnet ist, auf. Diese Frontplatte besitzt vorteilhafterweise abgewinkelte Seitenkanten.

Die erfindungsgemäße Heizkörperanordnung weist einen Heizkörper auf, welcher in einer Mauernische angeordnet ist, wobei die Wärmeisolationsplatte zwischen der Nischenrückwand und der Rückseite des Grundkörpers angeordnet ist.

Durch eine derartige Anordnung der Wärmeisolationsplatte auf der Rückseite des Grundkörpers wird die Wärmeabstrahlung in Richtung Nischenrückwand verringert. Die Energieeffizienz des Heizkörpers steigt entsprechend.

In einer vorteilhaften Ausführungsform ist zwischen den Seitenkanten der Frontplatte des Heizkörpers und den Seitenwänden der Nische ein Abdichtelement angeordnet. Zwischen den abgewinkelten Seitenkanten und den Seitenflächen der Nische kann sich ein Aufnahmeraum für ein Abdichtelement ausbilden. Durch ein derartiges Abdichtelement ist ein zuverlässiges Verschließen der Wandnische möglich.

In einer weiteren vorteilhaften Ausführungsform weist die Heizkörperanordnung ferner eine die Mauernische teilweise verschließende, abnehmbare Luke auf. Die Luke kann leicht abgenommen werden, um auf unkomplizierte Art und Weise Wartungs-, Reinigungs- und/oder Montagearbeiten am Grundkörper und/oder an den Heizwasseranschlüssen durchführen zu können.

Als besonders vorteilhafte Fixiermöglichkeit für die Luke hat sich die lösbare Fixierung der Luke durch Schweißbolzen, die in Klemmbuchsen eines Rahmens eingebracht werden, herausgestellt.

Die Erfindung ist anhand eines Ausführungsbeispiels in den Zeichnungsfiguren weiter erläutert. Es zeigen:

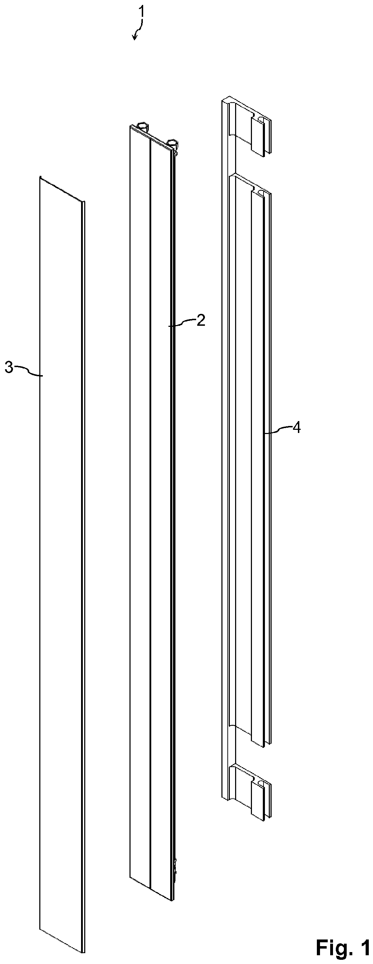

- Fig. 1: eine perspektivische Explosionsdarstellung eines Heizkörpers;

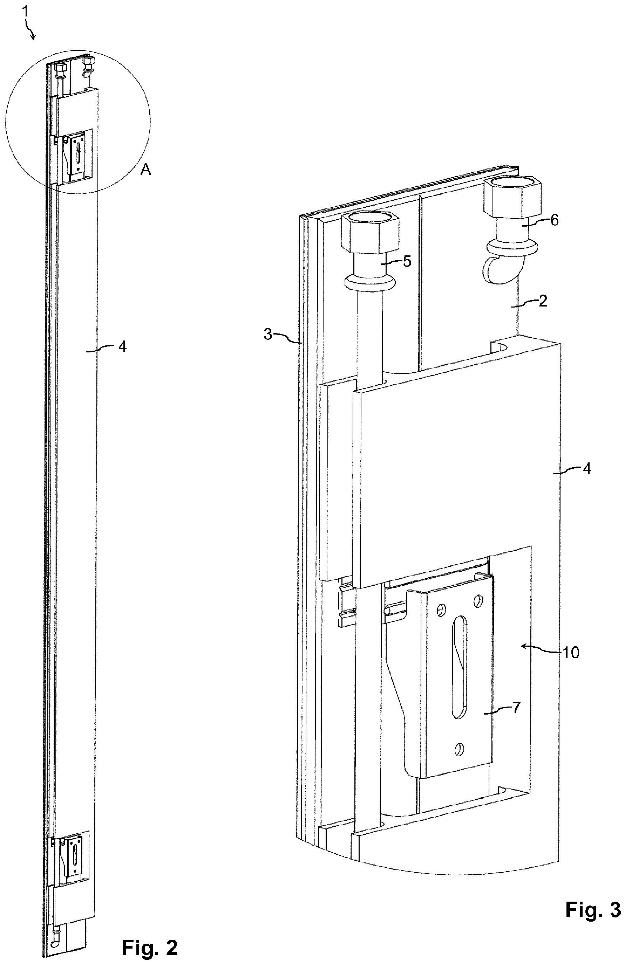

- Fig. 2: eine perspektivische Ansicht der Rückseite des Heizkörpers aus Fig. 1;
- Fig. 3: eine Detailansicht des Bereichs A aus Fig. 2;
- Fig. 4: eine Vorderansicht des Heizkörpers aus Fig. 1;
- Fig. 5: eine Schnittansicht der Ebene B-B aus Fig. 4;
- Fig. 6: eine Schnittansicht der Ebene B-B aus Fig. 4 mit einer Mauernische; und
- Fig. 7: eine perspektivische Ansicht des Heizkörpers aus Fig. 1 mit einer Luke, eingebaut in eine Mauernische.

Der in den Figuren dargestellte Heizkörper 1 weist einen Grundkörper 2, eine Frontplatte 3 und eine Wärmeisolationsplatte 4 auf. Der Grundkörper 2 besitzt die Form eines langgezogenen Rechtecks. Auf der Rückseite des Grundkörpers 2 sind ein erster Heizwasseranschluss 5 und ein zweiter Heizwasseranschluss 6 angebracht. Je nach Einbausituation des Heizkörpers 1 ist entweder der erste Heizwasseranschluss 5 oder der zweite Heizwasseranschluss 6 als Heizwasserzulauf und der jeweils andere Heizwasseranschluss als Heizwasserrücklauf ausgebildet.

Des Weiteren sind auf der Rückseite des Grundkörpers 2 insgesamt zwei Montageelement 7 angebracht, die zur Befestigung des Heizkörpers 1 an einer rückwärtig vom Heizkörper 1 gelegenen Wand 11 dienen.

Zwischen der rückwärtigen Wand 11 und der Rückseite des Grundkörpers 2 ist die Wärmeisolationsplatte 4 angeordnet. Die Wärmeisolationsplatte 4 weist ebenfalls die Form eines langgezogenen Rechtecks auf und ist in ihren Abmessungen an die Größe des Grundkörpers 2 angepasst, sodass die Wärmeisolationsplatte 4 im Wesentlichen die Rückseite des Grundkörpers 2 abdeckt.

Die Wärmeisolationsplatte 4 besitzt eine Aussparung 8 zur Aufnahme des ersten Heizwasseranschlusses 5. Außerdem weist die Wärmeisolationsplatte 4 eine dem Grundkörper 2 - genauer der Rückseite des Grundkörpers 2 - zugewandte Ausnehmung 9 auf. Diese Ausnehmung 9 erstreckt sich in Richtung der Längsseite der Wärmeisolationsplatte 4 und ermöglicht die Zirkulation erwärmter Luft. Schließlich weist die Wärmeisolationsplatte 4 im Bereich der Montageelemente 7 jeweils eine Montageaussparung 10 auf.

Auf der Vorderseite des Grundkörpers 2 ist die Frontplatte 3 angebracht und bildet den raumseitigen Abschluss des Heizkörpers 1. Randseitig erstreckt sich die Frontplatte 3 über den Grundkörper 2 hinaus. Die Seitenkanten 20 der Frontplatte 3 sind abgewinkelt.

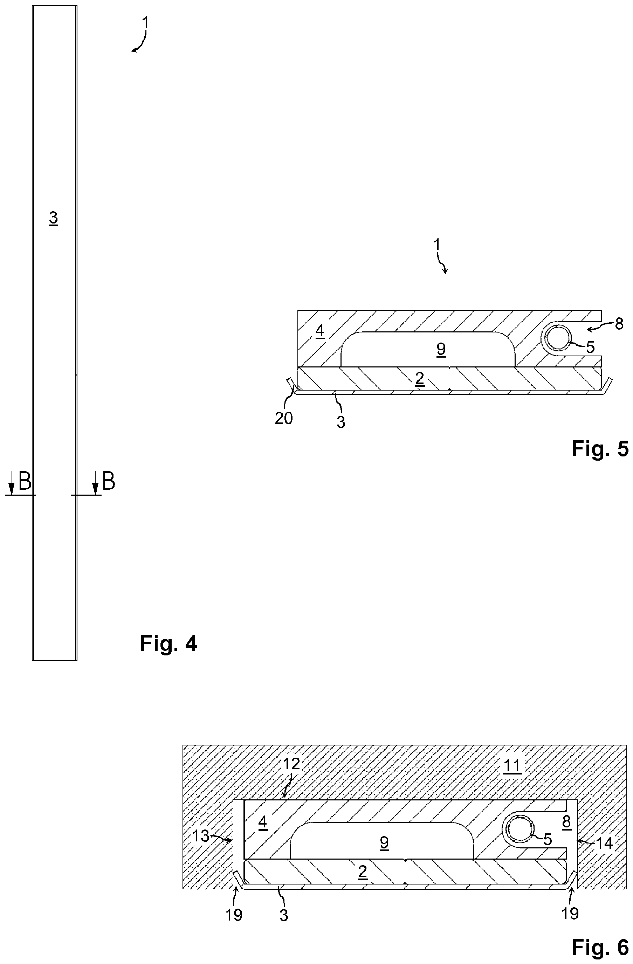

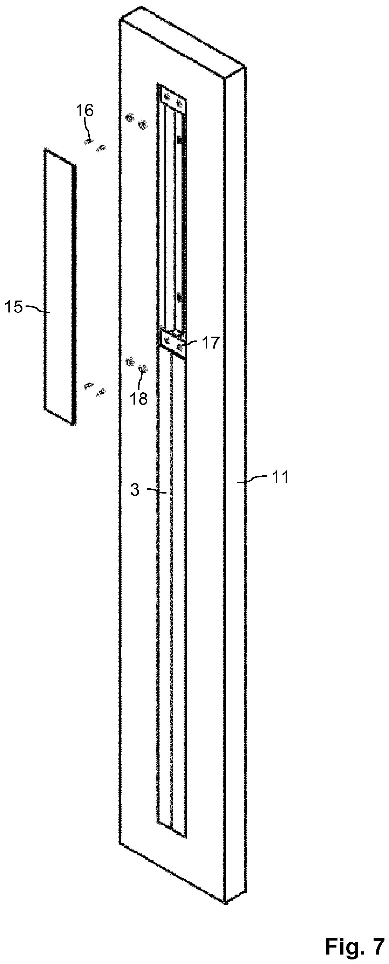

Fig. 6 und Fig. 7 zeigen die Anordnung des Heizkörpers 1 in einer Mauernische einer Wand 11. Die Mauernische besitzt eine Nischenrückwand 12 und Nischenseitenwände 13, 14. In das durch die Nischenrückwand 12 und die Nischenseitenwände 13, 14 aufgespannte Raumvolumen ist der Heizkörper 1 eingebracht. Die Heizwasseranschlüsse 5, 6 sind mit einem bauseitig vorhandenen Heizrohrsystem verbunden. Die Abmessungen der Mauernische und des Heizkörpers 1 sind dabei derart aufeinander abgestimmt, dass zwischen den Seitenkanten 20 der Frontplatte 3 und den Nischenseitenwänden 13, 14 allenfalls ein kleiner Spalt verbleibt. Durch die abgewinkelte Gestalt der Seitenkanten 20 bildet sich zwischen Nischenseitenwand 13, 14 und dem Heizkörper 1 zusätzlich ein Aufnahmeraum 19. Dieser Aufnahmeraum 19 dient zur Aufnahme eines Abdichtelements (in den Figuren nicht dargestellt).

In einem Rahmen 17 aufgenommen ist eine Luke (Deckel, Öffnung) 15. Diese Luke 15 ist abnehmbar und verschließt die Mauernische teilweise. Die Luke 15 ist durch Schweißbolzen 16, die in Klemmbuchsen 18 des Rahmens 17 eingebracht werden, lösbar mit dem Rahmen 17 verbunden.

Der Heizkörper 1 kann sowohl vertikal (d.h. die Längsseite des Grundkörpers 2 erstreckt sich in vertikale Richtung), als auch horizontal (d.h. die Längsseite des Grundkörpers 2 erstreckt sich in horizontale Richtung) an eine Wand 11 angebaut sein.

### BEZUGSZEICHENLISTE

- 1: Heizkörper
- 2: Grundkörper
- 3: Frontplatte
- 4: Wärmeisolationsplatte
- 5, 6: Heizwasseranschluss
- 7: Montageelement
- 8: Aussparung
- 9: Ausnehmung
- 10: Montageaussparung
- 11: Wand
- 12: Nischenrückwand
- 13, 14: Nischenseitenwand
- 15: Luke
- 16: Schweißbolzen
- 17: Rahmen
- 18: Klemmbuchsen
- 19: Aufnahmeraum
- 20: Seitenkante

## Patentansprüche

1. Heizkörper (1), mit:
- einem im Wesentlichen die Form eines langgezogenen Rechtecks aufweisenden Grundkörper (2);
- einem ersten rückseitig am Grundkörper (2) angebrachten Heizwasseranschluss (5);
- einem zweiten rückseitig am Grundkörper (2) angebrachten Heizwasseranschluss (6); und
- einer rückseitig am Grundkörper (2) angebrachten, im Wesentlichen die Form eines langgezogenen Rechtecks aufweisenden Wärmeisolationsplatte (4),
wobei die Wärmeisolationsplatte (4) eine dem Grundkörper (2) zugewandte Ausnehmung (9) aufweist, **dadurch gekennzeichnet, dass** in der Ausnehmung (9) durch den Grundkörper (2) erwärmte Luft zirkulieren kann,
wobei die Ausnehmung (9) sich in Richtung der Längsseite der Wärmeisolationsplatte (4) erstreckt.

2. Heizkörper nach Anspruch 1,
wobei die Wärmeisolationsplatte (4) eine Aussparung (8) zur Aufnahme des ersten Heizwasseranschlusses (5) und/oder des zweiten Heizwasseranschlusses (6) aufweist.

3. Heizkörper nach einem der vorhergehenden Ansprüche, wobei am Grundkörper (2) mindestens ein Montageelement (7) zur Montage des Heizkörpers (1) an eine Wand (11) angebracht ist und die Wärmeisolationsplatte (4) im Bereich des Montageelements (7) eine Montageaussparung (10) aufweist.

4. Heizkörper nach einem der vorhergehenden Ansprüche, wobei die Wärmeisolationsplatte (4) als Vakuum-Isolations-Panel oder als Platte aus Polyisocyanurate (PIR) ausgebildet ist.

5. Heizkörper nach einem der vorhergehenden Ansprüche ferner aufweisend eine Frontplatte (3), die vorderseitig an dem Grundkörper (2) angeordnet ist.

6. Heizkörpers nach Anspruch 5, wobei die Frontplatte (3) abgewinkelte Seitenkanten (20) aufweist.

7. Heizkörperanordnung, aufweisend eine Mauernische und einen Heizkörper nach einem der vorhergehenden Ansprüche, welcher in einer Mauernische angeordnet ist, wobei die Wärmeisolationsplatte (4) zwischen der Nischenrückwand (12) und der Rückseite des Grundkörpers (2) angeordnet ist.

8. Heizkörperanordnung nach Anspruch 7, wobei zwischen den Seitenkanten der Frontplatte (3) des Heizkörpers (1) und den Seitenwänden (13, 14) der Mauernische ein Abdichtelement angeordnet ist.

9. Heizkörperanordnung nach einem der Ansprüche 7 oder 8 ferner aufweisend eine die Mauernische teilweise verschließende, abnehmbare Luke (15).

10. Heizkörperanordnung nach Anspruch 9, wobei die Luke (15) lösbar durch Schweißbolzen (16) in Klemmbuchsen (18) eines Rahmens (17) fixiert ist.

## Claims

1. Radiator (1), having:
- a basic body (2) substantially having the form of an elongate rectangle;
- a first hot water connection (5) attached to the rear side of the basic body (2);
- a second hot water connection (6) attached to the rear side of the basic body (2); and
- a thermal insulation panel (4) which is attached to the rear side of the basic body (2) and substantially has the form of an elongate rectangle,
wherein the thermal insulation panel (4) has a recess (9) facing the basic body (2), **characterized in that** air heated by the basic body (2) can circulate in the recess (9), wherein the recess (9) extends in the direction of the longitudinal side of the thermal insulation panel (4).

2. Radiator according to Claim 1, wherein the thermal insulation panel (4) has a cutout (8) for accommodating the first hot water connection (5) and/or the second hot water connection (6).

3. Radiator according to either of the preceding claims, wherein at least one mounting element (7) for mounting the radiator (1) on a wall (11) is attached to the basic body (2) and the thermal insulation panel (4) has a mounting cutout (10) in the region of the mounting element (7).

4. Radiator according to one of the preceding claims, wherein the thermal insulation panel (4) is designed as a vacuum insulation panel or as a panel formed from polyisocyanurate (PIR).

5. Radiator according to one of the preceding claims, furthermore having a front panel (3) which is arranged on the front side of the basic body (2).

6. Radiator according to Claim 5, wherein the front panel (3) has angled side edges (20).

7. Radiator assembly, having a wall niche and a radiator according to one of the preceding claims which is arranged in a wall niche, wherein the thermal insulation panel (4) is arranged between the niche rear wall (12) and the rear side of the basic body (2).

8. Radiator assembly according to Claim 7, wherein a sealing element is arranged between the side edges of the front panel (3) of the radiator (1) and the side walls (13, 14) of the wall niche.

9. Radiator assembly according to either of Claims 7 and 8, furthermore having a removable hatch (15) which partially closes the wall niche.

10. Radiator assembly according to Claim 9, wherein the hatch (15) is fixed releasably in clamping bushings (18) of a frame (17) by means of welding studs (16).

## Revendications

1. Corps de chauffe (1) présentant :
un corps de base (2) qui présente essentiellement la forme d'un rectangle allongé,
un premier raccordement (5) à l'eau chaude disposé sur le côté dorsal du corps de base (2),
un deuxième raccordement (6) à l'eau chaude disposé sur le côté dorsal du corps de base (2) et
une plaque (14) d'isolation thermique qui présente essentiellement la forme d'un rectangle allongé et disposée sur le côté dorsal du corps de base (2),
la plaque (4) d'isolation thermique présentant une découpe (9) tournée vers le corps de base (2), **caractérisé en ce que**
de l'air chauffé par le corps de base (2) peut circuler dans la découpe (9) et
**en ce que** la découpe (9) s'étend dans la direction du côté longitudinal de la plaque (4) d'isolation thermique.

2. Corps de chauffe selon la revendication 1, dans lequel la plaque (4) d'isolation thermique présente une découpe (8) qui reprend le premier raccordement (5) à l'eau chaude et/ou le deuxième raccordement (6) à l'eau chaude.

3. Corps de chauffe selon l'une des revendications précédentes, dans lequel au moins un élément de montage (7) qui permet de monter le corps de chauffe (1) sur une paroi (11) est disposé sur le corps de base (2) et en ce que la plaque (4) d'isolation thermique présente une découpe de montage (10) au niveau de l'élément de montage (7).

4. Corps de chauffe selon l'une des revendications précédentes, dans lequel la plaque (4) d'isolation thermique est configurée comme panneau d'isolation sous vide ou comme plaque en polyisocyanurate (PIR).

5. Corps de chauffe selon l'une des revendications précédentes, présentant en outre une plaque frontale (3) disposée sur le côté avant du corps de base (2).

6. Corps de chauffe selon la revendication 5, dans lequel la plaque frontale (3) présente des bords latéraux (20) coudés.

7. Ensemble de corps de chauffe présentant une niche dans la maçonnerie et un corps de chauffe selon l'une des revendications précédentes, disposé dans la niche de maçonnerie, la plaque (4) d'isolation thermique étant disposée entre la paroi arrière (12) de la niche et le côté dorsal du corps de base (2).

8. Ensemble de corps de chauffe selon la revendication 7, dans lequel un élément d'étanchéité est disposé entre les bords latéraux de la plaque frontale (3) du corps de chauffe (1) et les parois latérales (13, 14) de la niche de maçonnerie.

9. Ensemble de corps de chauffe selon l'une des revendications 7 ou 8, présentant en outre un hublot (15) amovible qui ferme en partie la niche de maçonnerie.

10. Ensemble de corps de chauffe selon la revendication 9, dans lequel le hublot (15) est fixé de manière libérable dans des douilles de serrage (18) de l'encadrement (17) au moyen de goujons soudés (16).
